# EUROPEAN PATENT APPLICATION

(11) **EP 3 361 125 A1**
(43) Date of publication of application: **15.08.2018**
(21) Application number: 16853535.9
(22) Date of filing: 03.10.2016
(51) Int. Cl.: F16H 27/04, F16H 1/16

(54) **GEAR TRANSMISSION DEVICE**

(30) Priority: 09.10.2015 JP 2015201265
(71) Applicant: Aisin Seiki Kabushiki Kaisha, Kariya-shi, Aichi 448-8650 (JP)
(72) Inventor: YAMAGUCHI, Shinya, Kariya-shi, Aichi 448-8650 (JP); TSUJIMOTO, Katsuhiro, Kariya-shi, Aichi 448-8650 (JP)
(74) Representative: Kramer Barske Schmidtchen Patentanwälte PartG mbB
(86) International application number: PCT/JP2016/079315
(87) International publication number: WO 2017/061381

(57) **Abstract**

A gear transmission mechanism includes a second gear, a first gear forming tooth portions at an outer circumference of a sector-like gear body for meshing with the second gear, and a rotation restricting mechanism for setting a rotation limit of the first gear. The rotation restricting mechanism includes an abutment portion provided in the first gear and a stopper provided in the housing. At least one of an abutment face in which the abutment portion comes into abutment against the stopper and a stopper face in which the stopper comes into abutment against the abutment face includes an inclination portion for creating a component force from rotational force of the sector gear at the time of mutual abutment.

## Description

### TECHNICAL FIELD

This disclose relates to a gear transmission device having a rotation restricting mechanism for setting a rotation limit of a gear.

### BACKGROUND ART

As a gear transmission device configured as above, Patent Document 1 discloses a technique having a pinion gear, a sector gear meshing therewith, and a buffering mechanism for setting a rotation limit of the sector gear. According to this technique, the buffering mechanism includes a retaining piece formed at an end of the sector gear, a bracket, and a buffering member such as a rubber, held to the bracket. The rotation limit of the sector gear is determined by bringing the retaining piece into abutment against the buffering member.

Also, Patent Document 2 discloses a technique having a pinion gear, a sector gear meshing therewith, and a restricting means for determining a rotation limit of the sector gear. According to this technique, the restricting means forms an abutment portion which is formed concave on an extension line along a lining-up direction of a plurality of tooth portions of the sector gear and which comes into abutment against the pinion gear. With this arrangement, the rotation limit of the sector gear is determined by bringing the pinion gear into abutment against an inner face of the abutment portion.

### Background Art Documents

### Patent Documents

Patent Document 1: Japanese Unexamined Patent Application Publication No. 2004-257078
Patent Document 2: Japanese Unexamined Patent Application Publication No. 2011-213149

### SUMMARY

### Problem to be Solved by Invention

A sector gear is configured to rotate within an angular range less than 360 degrees. So, it is necessary to provide also a restricting mechanism for determining its rotation limit. Further, in the case of a conceivable example of such restricting mechanism which has e.g. a stopper that comes into abutment against the sector gear, a shock can occur at the time of abutment of the stopper against the sector gear.

In order to suppress such shock, Patent Document 1 includes the buffering member. Further, in the case of Patent Document 2, its restricting mechanism is constituted not of inclusion of a stopper dedicated thereto, but of the arrangement of causing the pinion gear into abutment against a portion of the sector gear. So, although the technique realizes reduction of number of components, it would be difficult for the technique to suppress the shock.

Incidentally, as is the case with the arrangement of Patent Document 2, in case a first gear reaches a rotation limit and comes into abutment against the pinion gear (also in the case of its coming into abutment against the stopper), momentarily at the timing of the abutment, all of rotational energy of the first gear is converted into vibration energy and/or heat energy or the like at the face of this abutment, thus inviting a shock.

For the reason mentioned above, there is a need for a gear transmission device capable of effectively suppressing a shock at the time of determination of a rotation limit of a sector-like gear, with a simple arrangement.

### Solution

According to a characterizing feature of the present invention, a first gear including a sector-like gear body having tooth portions in an outer circumference of the sector-like gear body;
a second gear meshing with the first gear, and a rotation restricting mechanism for setting a rotation limit of the first gear; and
the first gear, the second gear and the rotation restricting mechanism being accommodated in a housing,
the rotation restricting mechanism including a stopper provided in the housing and an abutment portion provided in the first gear and configured to come into abutment against the stopper, at least one of the stopper and the abutment portion including an inclination portion for inclining a direction of a reaction force which occurs at the time of mutual abutment of the stopper and the abutment portion relative to a rotational circumferential direction of the fist gear.

With the above-described arrangement, when the abutment portion of the first gear and the stopper face of the stopper of the housing come into abutment against each other, by the inclination portion provided in at least one of the abutment face and the stopper face, a rotational force of the first gear is caused to be applied in a direction inclined relative to the rotational circumferential direction. With this, the force at the time of abutment is effectively dissipated, so that momentary consumption of the rotational energy of the first gear can be suppressed and the shock can be alleviated without using any member dedicated to buffering.

As a result, there has been obtained a gear transmission device capable of effectively suppressing a shock at the time of determination of a rotation limit of a sector-like gear, with a simple arrangement.

In the present invention, the inclination portion can be formed as a curved face.

With the above, when the abutment face of the abutment portion of the first gear and the stopper face of the stopper of the housing come into abutment against each other, it is possible to gradually vary the force applied between the abutment portion and the stopper. For instance, in the case of an arrangement of the inclination portion being formed as a concave face, it becomes possible to increase a braking force in a relatively gentle manner at the initial stage and to increase the force largely thereafter. Conversely, in the case of an arrangement of the inclination portion being formed as a convex face, it becomes possible to provide a relatively strong braking force at the initial stage and to increase the force in a gentle manner thereafter. With either one of the curved faces above, it is possible to progressively reduce the rotational speed of the first gear and stop it at the rotation limit.

According to a further arrangement provided by the present invention, the second gear is a pinion gear and the first gear is a face gear that has tooth portions protruding from one face of the gear body at its outer circumferential portion and that meshes with the pinion gear; and
posture of the inclination portion is set such that the first gear is detached from the second gear at the time of the abutment between the stopper and the abutment portion.

With the above-described arrangement, in case the abutment face of the abutment portion of the first gear configured as a face gear comes into abutment against the stopper face of the stopper of the housing, a force can be applied in the direction for detaching the first gear from the second gear configured as a pinion gear. Due to the effect of this force, under a state when the first gear has reached its rotation limit, the force of abutment between the respective tooth faces of the first gear and the second gear is reduced, thus suppressing deformation or damage of the tooth faces. Moreover, an inconvenience can be resolved that an excessive force continues to be effective under the state when the first gear has reached its rotation limit.

According to a further arrangement provided by the present invention, at least one of the stopper and the abutment portion includes a roller which is rotatable.

With the above arrangement, even if the abutment face of the abutment portion and the stopper face of the stopper of the housing comes into strong abutment against each other after the first gear reaches the rotation limit, since the roller is rotatable, such inconvenience as mutual sticking therebetween can be avoided. Therefore, when the sector gear is rotated in the direction of releasing the abutment, the roller rotates to allow the separation between the abutment face and the stopper face to take place easily.

### BRIEF DESCRIPTION OF THE DRAWINGS

[Fig. 1] is a vertical section of a gear transmission device,
[Fig. 2] is a horizontal section of the gear transmission device,
[Fig. 3] is a perspective view of a face gear,
[Fig. 4] is a section view showing the gear transmission device when the face gear has reached a rotation limit,
[Fig. 5] is a view showing a state when an abutment portion is placed in abutment against a stopper,
[Fig. 6] is a view showing the face gear after the abutment portion comes into abutment against the stopper,
[Fig. 7] is a view showing a state when an abutment portion is placed in abutment against a stopper in a modified example,
[Fig. 8] is a view showing a face gear after the abutment portion comes into abutment against the stopper in the modified example,
[Fig. 9] is a vertical section of a gear transmission device according to a further embodiment (a),
[Fig. 10] is a vertical section of a gear transmission device according to a further embodiment (a),
[Fig. 11] is a vertical section of a gear transmission device according to the further embodiment (b),
[Fig. 12] is a vertical section showing a stopper and an abutment portion when a sector gear is at its rotation limit position in the further embodiment (b),
[Fig. 13] is a perspective view showing a rotation restricting mechanism in a further embodiment (c), and
[Fig. 14] is a perspective view showing a rotation restricting mechanism in a further embodiment (d).

### EMBODIMENTS

Next, embodiments of the present invention will be explained with reference to the drawings.

### [Basic Configuration of Gear Transmission Device]

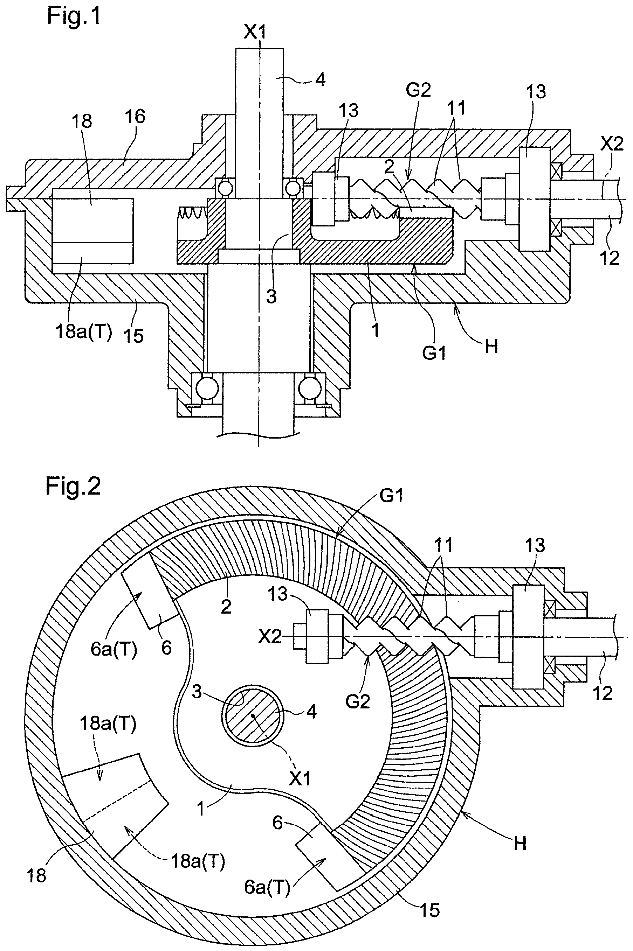

As shown in Figs. 1-4, a gear transmission device is configured such that a sector gear G1 (an example of a "first gear") rotatable about a first axis X1 and a pinion gear G2 (an example of a "second gear") rotatable about a second axis X2 located at a position offset from the first axis X1 (an example of a "rotational axis") are meshed with each other and these are housed together in a housing H.

This gear transmission device is to be incorporated in a transmission system configured such that as the pinion gear G2 is rotatably driven by an actuator such as an electric motor or the like, the sector gear G1 is driven at a reduced speed.

The sector gear G1 (first gear) is configured as a face gear type and in an outer circumferential portion of a sector-like gear body 1 centering about the first axis X1, a plurality of tooth portions 2 protrude therefrom. This sector gear G1 is supported to be rotatable relative to the housing H as an output shaft 4 is connected and inserted into a drive hole 3 coaxial with the first axis X1 and this output shaft 4 is rotatably supported to the housing H.

The sector gear G1 is assumed to be made by hammered work or pressing work. Alternatively, the plurality of tooth portions 2 may be formed by cutting of a material or by resin molding using a mold.

The pinion gear G2 (second gear) is configured as a helical gear comprised of a shaft 12 and two grooves of gear portion 11 (a tooth portion of the pinion gear G2) in the form of threads formed integrally therein, and the pinion gear G2 is supported to the housing H to be rotatable about the second axis X2 via bearings 13 disposed at an inner end position and an intermediate position.

The housing H has an arrangement of a lid-like case 16 being superposed on a main case 15 in a sealed manner and accommodates the sector gear G1, the pinion gear G2 and a rotation restricting mechanism. Incidentally, the main case 15 and the lid-like case 16 are assumed to be made of metal such as an aluminum alloy. Instead, these may be formed of resin.

### [Rotation Restricting Mechanism]

With the transmission device configured as above, since the sector gear G1 rotates within a set angular range, there is provided the rotation restricting mechanism configured to determine a rotation limit of the sector gear G1 by coming into abutment against this sector gear G1 when it has reached the rotation limit. This rotation restricting mechanism is constituted essentially of a pair of abutment portions 6 formed in the sector gear G1 and a single stopper 18 supported to the housing H.

The rotation restricting mechanism is configured such that simultaneously with the determination of the rotation limit of the sector gear G1 through the abutment between the abutment portions 6 and the stopper 18, a direction of a reaction force generated from this abutment is inclined relative to the rotational circumferential direction of the first gear. With this configuration, upon arrival of the sector gear G1 at its rotation limit, a force is generated (a component force is generated) in a direction for detaching the tooth portion 2 of the sector gear G1 from the gear portion 11 of the pinion gear G2, thus suppressing a shock at the time of the abutment and suppressing also rise of the surface pressure between the tooth portion 2 and the gear portion 11.

In the instant embodiment, such rotation limits are set at opposed ends of the rotatable range of the sector gear G1. Alternatively, such rotation limit may be set at one position at one end of the above rotatable range.

As an exemplary specific arrangement of the above, the rotation restricting mechanism consists essentially of the abutment portions 6 that are formed as protrusions at areas forming respective extensions from the outer ends of the arcuate region where the tooth portions 2 are formed in the gear body 1 of the sector gear G1 and the stopper 18 integrally formed in the main case 15 so as to come into abutment against the abutment portions 6. Incidentally, the stopper 18 may be formed alternatively in the lid-like case 16. Further, the abutment portions 6 may be formed integral with the gear body 1 or may be attached to this gear body 1.

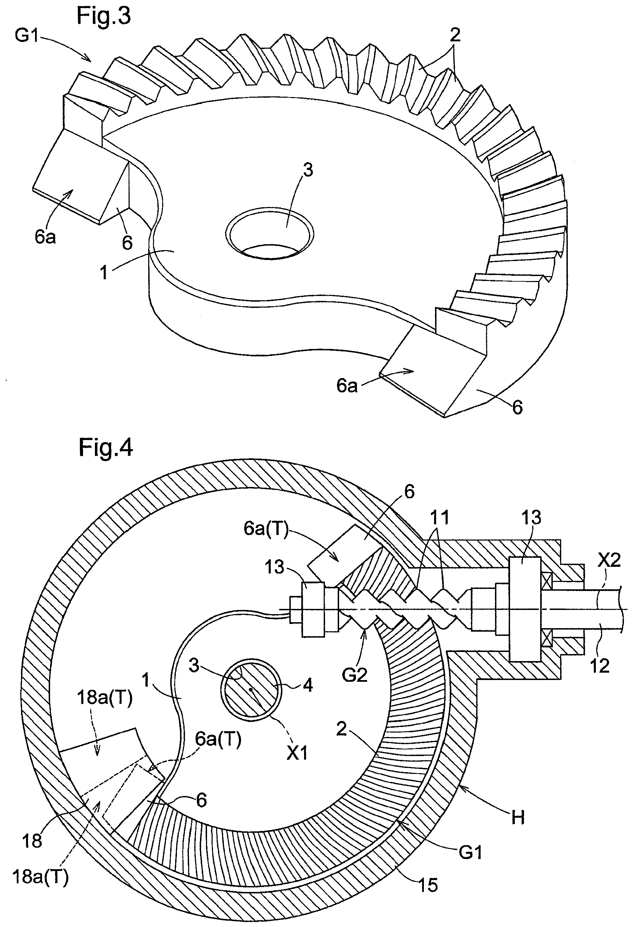

In each abutment portion 6, as shown in Fig. 3, Fig. 5 and Fig. 6, an abutment face 6a is formed as an inclination portion T and in the stopper 18, stopper faces 18a are formed as an inclination portion T. Namely, with this rotation restricting mechanism, the positional relationship of the respective parts is set such that the abutment face 6a may come into abutment against the stopper face 18a when the sector gear G1 reaches its rotation limit. Incidentally, in the instant embodiment, two stopper faces 18a are formed in the single stopper 18. Instead, two stoppers 18 may be provided.

### [Operation by Rotation Restricting Mechanism]

For instance, as viewed in the direction shown in Fig. 2, there is conceived a rotation restricting mechanism configured such that an end face of the sector gear G1 is formed on a virtual line extending through the first axis X1 and along the radial direction of the sector gear G1 and a restricting piece for coming into abutment against this end face is included in the housing H. With this conceived rotation restricting mechanism, in case the restricting piece comes into abutment against the end face of the sector gear G1, at the timing of this abutment (momentarily), all of the rotational energy of the sector gear G1 will be converted into vibration energy and/or heat energy at the contact face between the end face and the restricting piece, so a shock will occur.

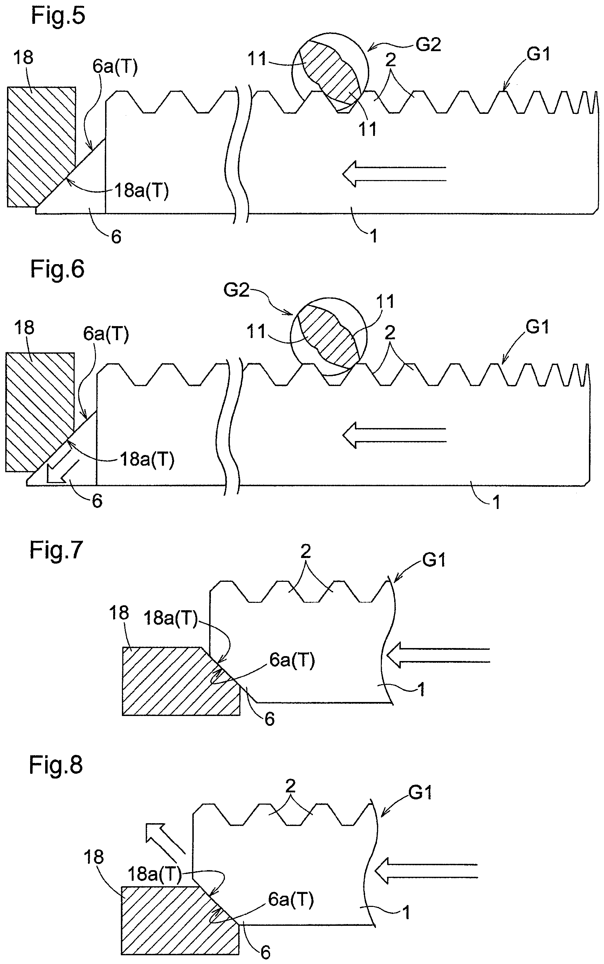

On the other hand, according to the rotation restricting mechanism of the instant embodiment, as illustrated in Fig. 5, when the abutment face 6a comes into abutment against the stopper face 18a with arrival of the sector gear G1 at its rotation limit, through abutment between the stopper face 18a and the abutment face 6a serving as the inclination portions T, there occurs a small slippage between the respective contacting portions, so that inconvenience of the consumption of the rotational energy simultaneous (momentarily) with the abutment is prevented. Thus, the shock is eased and the shock (impact) sound is softened, and the component force generated from the rotation of the sector gear G1 can be caused to be exerted in the direction of detaching the sector gear G1 from the pinion gear G2.

Further, although Fig. 6 shows displacement of the sector gear G1 in an exaggerated manner, via the effect of the component force, the sector gear G1 as a whole via e.g. elastic deformation thereof, can be displaced slightly in the direction along the first axis X1. As a result of this slight displacement, the pressure applied between the tooth portion 2 of the sector gear G1 and the gear portion 11 of the pinion gear G2 is reduced, thus suppressing deformation or damage of the tooth portion 2. Moreover, there is realized solution of inconvenience of the sector gear G1 and the pinion gear G2 becoming locked to each other.

### [Modified Examples of Rotation Restricting Mechanism]

As described above, the arrangement that the component force generated from the abutment between the abutment face 6a and the stopper face 18a is caused to be applied in the direction of detaching the sector gear G1 from the pinion gear G2 is effective for a sector gear G1 having a relatively small radius. However, in the case of a sector gear G1 having a large radius, such component force will be applied in a direction of inclining the first axis X1. Namely, the sector gear G1 will be slightly inclined with the center portion of the drive hole 3 of the sector gear G1 serving as the center of this inclination.

Then, with utilization of such inclining phenomenon of the sector gear G1 as above, in order to detach the sector gear G1 from the pinion gear G2, as shown in Fig. 7 and Fig. 8, in this modified example, the inclination directions of the abutment face 6a and the stopper face 18a are set opposite to those in the foregoing embodiment. In this modified example, the abutment portion 6 is formed by working a portion of the gear body 1 of the sector gear G1 into an inclined shape. Instead, like the foregoing embodiment, the abutment portion 6 may be formed as a protrusion from the gear body 1.

With the rotation restricting mechanism configured as above, it becomes possible to determine mechanically the rotation limit of the sector gear G1 via the abutment as the abutment face 6a comes into abutment against the stopper face 18a as illustrated in Fig. 7. Further, although Fig. 8 shows the displacement in an exaggerated manner, when the sector gear G1 reaches its rotation limit and further rotation thereof is restricted by the rotation restricting mechanism, a component force will be applied in the direction oppose to that described above, whereby the sector gear G1 will be inclined slightly in the direction of detaching the sector gear G1 from the pinion gear G2, so that the pressure applied between the tooth portion 2 of the pinion gear G1 and the gear portion 11 of the pinion gear G2 can be reduced.

### [Further Embodiments]

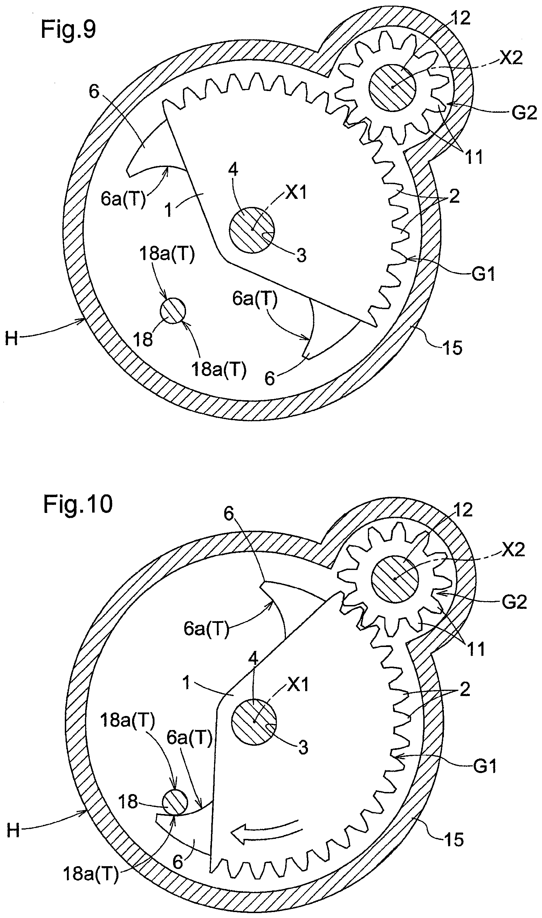

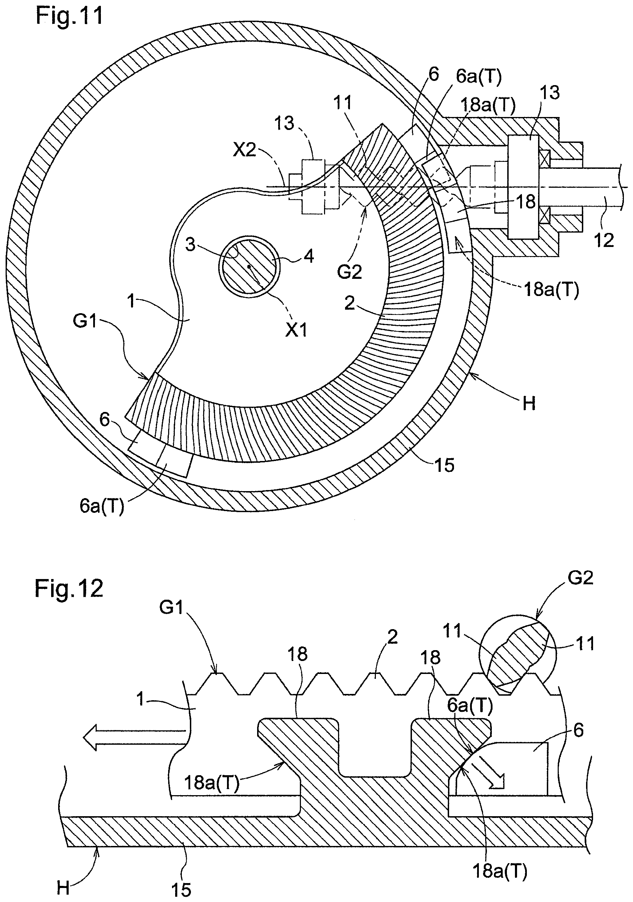

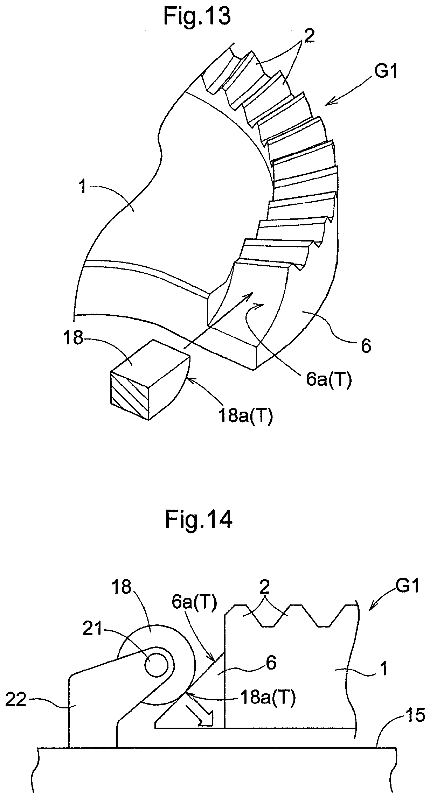

The present invention can be embodied differently as follows from the foregoing embodiment (in the following, components having same functions as those of the foregoing embodiment will be denoted with same or like reference numerals/marks as those used in the foregoing embodiment).
(a) As shown in Fig. 9 and Fig. 10, a gear transmission mechanism is constituted by including a sector gear G1 rotatable about the first axis X1 and forming gear portions 2 in the form of spur gear teeth in the outer circumference thereof and a pinon gear G2 rotatable about a second axis X2 oriented parallel with the first axis X1 and forming a gear portion 11 in the form of spur gear teeth for meshing with the tooth portions 2. With this gear transmission mechanism, the rotation restricting mechanism consists essentially of a pair of abutment portions 6 that protrude from end portions of the sector gear G1 along its rotational direction and a single stopper 18 fixed to the housing H for coming into abutment against the abutment portions 6.
   In this configuration, in each abutment portion 6, an abutment face 6a having a curved face is formed as the inclination portion T. And, a cylindrical pin is employed as the stopper 18. Incidentally, of the outer circumference of the stopper 18, a portion thereof coming into abutment against the abutment face 6a serves as a stopper face 18a. Especially, in this configuration, the inclination direction of the abutment face 6a is set such that when the sector gear G1 reaches its rotation limit and the stopper face 18a comes into abutment against the abutment face 6a, a component force may be applied to displace this abutment portion outwards (the direction away from the first axis X1).
   Namely, in the configuration of this further embodiment (a), when the sector gear G1 reaches its rotation limit and the abutment face 6a comes into abutment against the stopper face 18a as illustrated in Fig. 10, the abutment face 6a serving as the inclination portion T comes into abutment against the stopper face 18a of the stopper 18. In response to this abutment, slight slippage occurs at the abutment portion, whereby the inconvenience of consumption of the rotational energy simultaneous with the abutment is prevented, thus easing the shock and suppressing the shock (impact) sound.
   Further, at the time of this abutment, the component force generated from the rotation of the sector gear G1 is caused to be applied in the direction of detaching the sector gear G1 from the pinion gear G2. Under the effect of this component force, the tooth portion 2 of the sector gear G2 is slightly displaced in the direction away from the gear portion 11 of the pinion gear G2, As a result of this displacement, the pressure applied between the tooth portion 2 of the sector gear G1 and the gear portion 11 of the pinion gear G2 is reduced, thus suppressing deformation or damage of the tooth portion 2. Moreover, there is realized solution of inconvenience of the sector gear G1 and the pinion gear G2 becoming locked to each other.
   Incidentally, in the further embodiment shown in Fig. 9 and Fig. 10, the single stopper 18 is provided. Instead, two stoppers 18 may be provided.
(b) As shown in Fig. 11 and Fig. 12, like the foregoing embodiment, a gear transmission device is configured such that a sector gear G1 formed as a face gear rotatable about the first axis X1 and a pinion gear G2 rotatable about the second axis X2 offset from the first axis X1 are meshed with each other and these are accommodated together in the housing H. According to this gear transmission device, the rotation restricting mechanism consists essentially of a pair of abutment portions 6 that protrude radially outwards in the outer circumference of the sector gear G1 and a pair of stoppers 18 fixed to the housing H for coming into abutment against the abutment portions 6.
   According to the above-described configuration, in the respective abutment portion 6, the abutment face 6a is formed as an inclination portion T and in the stopper 18, a stopper face 18a under an inclined posture is formed as an inclination portion T for coming into abutment against the abutment face 6a. Especially, in this configuration, the stoppers 18 are fixedly provided in the inner face of the main housing 15 disposed adjacent the pinion gear G2. And, the inclinations of the abutment faces 6a and the stopper faces 18a are set such that when the sector gear G1 reaches its rotation limit and the stopper face 18a of the stopper 18 comes into abutment against the abutment face 6a of the abutment portion 6, a component force is applied in the direction for detaching the sector gear G1 from the pinion gear G2 in the direction along the first axis X1.
   With the above, upon arrival at the rotation limit, the abutment face 6a comes into abutment against the stopper face 18a of the stopper 18 and a slight slippage occurs at this abutment face. Thus, momentary consumption of rotational energy of the sector gear G1 is suppressed, thus easing the shock. And, due to the effect of the component force, the sector gear G1 as a whole is slightly displaced in the direction away from the pinion gear G2, thus reducing the pressure applied between the tooth portion 2 of the sector gear G1 and the gear portion 11 of the pinon gear G2, thereby suppressing damage and/or deformation of the tooth portion 2. Moreover, solution of the inconvenience of mutual locking between the sector gear G1 and the pinion gear G2 is realized.
(c) As shown in Fig. 13, the rotation restricting mechanism is constituted of an abutment portion 6 having an abutment face 6a as an inclination portion T in the form of a recess (concave) integrally formed in the gear body 1 (at the end position of the sector gear G1) and a stopper 18 having a stopper face protruding in the form of a gently protruding curved face. With the above-described setting of the respective shapes, at the initial sage of abutment, a gently increasing braking force will be applied and thereafter, the braking force will be increased largely, thus progressively reducing the rotational speed of the sector gear G1 and stopping it at the rotation limit. In particular, with this above configuration, with setting of the curvatures of the abutment face 6a and the stopper face 18a, it becomes also possible to suppress occurrence of locking (sticking) without increasing the contact area between the respective parts at the rotation limit.
   In the configuration of this further embodiment (c), the inclination portion T of the abutment face 6a is formed as a gently receded curved face. Instead, it may be formed as a gently protruding curved face. Further, the inclination portion T of the stopper face 18a is formed as a gently protruding curved face. Instead, it may be formed as a gently receded curved face. Further alternatively, one of the inclination portion T of the abutment face 6a and the inclination portion T of the stopper face 18a may be formed flat.
(d) As shown in Fig. 14, the rotation restricting mechanism can be constituted of an abutment portion 6 provided in the sector gear G1 and a stopper 18 provided as a roller that comes into abutment against an abutment face 6a as an inclination portion T of this abutment portion 6. The stopper 18 is rotatably supported to a support shaft 21, and the stopper 18 and the support shaft 21 are supported to the main case 15 via a bracket 22.
   In the case of the mechanism of this further embodiment (d), the abutment face 6a of the abutment portion 6 functions as an inclination portion T and the outer circumference of the roller 18 functions as an inclination portion T at the same time. In particular, when the sector gear G1 reaches its rotation limit and the abutment face 6a of the abutment portion 6 comes into abutment against the outer circumference of the roller-like stopper 18 as the inclination portion T, rotation of the stopper 18 around the support shaft 21 is allowed, so the inconvenience of the mutual locking of the respective parts will not be invited. Incidentally, in this further embodiment, there is provided the rotatable roller as the stopper 18. Instead of this, a roller can be provided in the abutment portion 6.
(e) The abutment face 6a of the abutment portion 6 and the stopper face 18a of the stopper 18 shown as the rotation restricting mechanism in the foregoing embodiment, its modified example and the respective further embodiments can be formed as flat inclined faces, gently protruding curved faces or gently receded curved faces. Further, in case the recess or the protrusion is provided in the form of a curve, its curvature can be made variable.

### Industrial Applicability

The present invention is applicable to a gear transmission device having a rotation restricting mechanism for setting a rotation limit of a gear.

### Description of Reference Marks/Numerals

- 1:: gear body
- 2:: tooth portion
- 6:: abutment portion
- 6a:: abutment face
- 18:: stopper
- 18a:: stopper face
- 20:: roller
- G1:: first gear (sector gear, face gear)
- G2:: second gear (pinion gear)
- H:: housing
- T:: inclination portion
- X:: rotational axis (first axis)

## Claims

1. A gear transmission device, comprising:
a first gear including a sector-like gear body having tooth portions in an outer circumference of the sector-like gear body;
a second gear meshing with the first gear; and
a rotation restricting mechanism for setting a rotation limit of the first gear,
the first gear, the second gear and the rotation restricting mechanism being accommodated in a housing,
the rotation restricting mechanism including a stopper provided in the housing and an abutment portion provided in the first gear and configured to come into abutment against the stopper, at least one of the stopper and the abutment portion including an inclination portion for inclining a direction of a reaction force which occurs at the time of mutual abutment of the stopper and the abutment portion relative to a rotational circumferential direction of the fist gear.

2. The gear transmission device of claim 1, wherein the inclination portion is formed as a curved face.

3. The gear transmission device of claim 1 or 2, wherein:
the second gear is a pinion gear;
the first gear is a face gear that has tooth portions protruding from one face of the gear body at its outer circumferential portion and that meshes with the pinion gear; and
posture of the inclination portion is set such that the first gear is detached from the second gear at the time of the abutment between the stopper and the abutment portion.

4. The gear transmission device of any one of claims 1-3, wherein at least one of the stopper and the abutment portion includes a roller which is rotatable.
